# EUROPEAN PATENT APPLICATION

(11) **EP 2 599 801 A1**
(43) Date of publication of application: **05.06.2013**
(21) Application number: 11812423.9
(22) Date of filing: 25.07.2011
(51) Int. Cl.: C08F 4/70, C08F 232/08

(54) **CATALYST COMPOSITION, METHOD FOR PRODUCING NORBORNENE COPOLYMER USING CATALYST COMPOSITION, NORBORNENE COPOLYMER, AND HEAT RESISTANT FILM USING COPOLYMER**

(30) Priority: 19.07.2011 JP 2011157686; 28.07.2010 JP 2010169354
(71) Applicant: Showa Denko K.K., Tokyo 105-8518 (JP)
(72) Inventor: KAITA Shojiro, Kodaira-shi Tokyo 187-8531 (JP); TARDIF Olivier, Kodaira-shi Tokyo 187-8531 (JP)
(74) Representative: Strehl Schübel-Hopf & Partner
(86) International application number: PCT/JP2011/066821
(87) International publication number: WO 2012/014833

(57) **Abstract**

Provided are a catalyst composition for efficiently obtaining a high molecular weight addition copolymer of a norbornene compound having a polar group, a process for producing a high molecular weight addition copolymer of a norbornene compound by using the above catalyst composition, a copolymer thereof and a film prepared by using the above copolymer.

It is a catalyst composition comprising a main catalyst (A) and a promoter (B) which are used for copolymerization of norbornene having a polar group, wherein the main catalyst (A) is a complex represented by Formula (1):

MLₙK1ₓK2_{y}K_{z} (1)

(wherein M is one transition metal selected from group 8 elements, group 9 elements and group 10 elements in the periodic table; L is a cyclopentadienyl base ligand containing a cyclopentadiene ring; K1, K2 and K3 are anionic ligands or neutral ligands which are different from each other; n is an integer of 0 to 2; x, y and z each are an integer including 0, and a sum thereof is 1 to 7); and the promoter (B) is an ionic compound (a) which can be reacted with the main catalyst (A) to form a cationic transition metal compound.

## Description

### Technical Field

The present invention relates to a catalyst composition used for norbornene base copolymerization, more specifically to a catalyst composition used as a production catalyst for a norbornene base copolymer which is excellent in a heat resistance and a transparency.

### Background Art

Cyclic olefin base addition polymers represented by norbornene base copolymers have so far been industrially used as organic materials which are excellent in a heat resistance and a transparency in the fields of an optical film and the like. It is reported in very many publications that the above cyclic olefin base addition polymers can be produced by addition-polymerization of cyclic olefin base monomers by using catalysts containing transition metal compounds of Ti, Zr, Cr, Co, Ni, Pd and the like.

For example, in European Patent Application Laid-Open No. 0445755 (patent document 1), transition metal compounds of group 5 to 10 elements in the periodic table are used as main catalysts, and methylaluminoxane (MAO) is used as a promoter. It is reported therein that the above procedure makes it possible to produce an addition homopolymer of norbornene having a number average molecular weight exceeding a million. However, in the above descriptions, polymerization of norbornene having a polar group which is a higher difficulty in the polymerization is not carried out. Further, since catalyst deactivation attributable to influence of a polar group is concerned, a molecular weight distribution (Mw/Mn) of a weight average molecular weight (Mw) to a number average molecular weight (Mn) exceeds 2.5, and monodispersed polymers are not shown therein.

In US Patent No. 3330815 (patent document 2), addition homopolymers of norbornene having a polar group and copolymers thereof with norbornene are reported. Production of polymers having a number average molecular weight exceeding 10,000 is not described therein. A polymerization activity of the catalyst leaves room for improvement, and an industrial applicability thereof is found to leave as well room for improvement.

Methods for improving addition homopolymerization of norbornene having a polar group and copolymerization thereof with norbornene are disclosed in Japanese Patent No. 3678754 (patent document 3) and Japanese Patent Application Laid-Open No. 31304/2008 (patent document 4). Both of the polymerization activity and a molecular weight of the polymers are enhanced in the above methods, however a number average molecular weight of copolymers disclosed in the examples is still less than 200,000. Production of Copolymers having a number average molecular weight of 200,000 or more in which various typical mechanical properties for utility have practical values is not disclosed. The description for average molecular weights of the number average molecular weight (Mn) and the weight average molecular weight (Mw) seems to be error in Table 1 of patent document 4, and Mw/Mn is not sufficiently disclosed.

Compositions in which transition metal compounds of group 8 to 10 elements in the periodic table having a cyclopentadienyl ligand are used as a main catalyst and in which they are combined with a promoter capable of being reacted with the main catalyst to generate a cationic transition metal compound are proposed in International Publication No. 06/064814 (patent document 5). It is shown therein that the above compositions allow an addition copolymer of norbornene having a polar group with norbornene to be efficiently produced to provide the copolymer having a high molecular weight. However, the above norbornene compound having a polar group has a structure in which an ester group is introduced directly into a norbornene skeleton, and a distance between a carbon-carbon double bond part thereof and the polar group is short, so that the norbornene compound readily coordinates to the transition metal complex as the catalyst whose catalytic activity is dropped. Accordingly, a polymer having a high molecular weight can be obtained from the addition homopolymerization of norbornene with a high activity, however, norbornene having a polar group is used, the catalytic activity is low while a copolymer having a high molecular weight is obtained.

Also, the polymers thus obtained are expected to have a heat resistance more than ever, and since they are excellent in an extrusion processability, they are expected to be applied to films having an excellent heat resistance in the industries of electronic engineering materials and others.

Patent document 1: European Patent Application Laid-Open No. 0445755
Patent document 2: US Patent No. 3330815
Patent document 3: Japanese Patent No. 3678754
Patent document 4: Japanese Patent Application Laid-Open No. 31304/2008
Patent document 5: International Publication No. 06/064814

### DISCLOSURE OF THE INVENTION

It has been found from the descriptions of the background art documents described above that desired is a catalyst composition of a high activity which forms a copolymer having a high molecular weight of 200,000 or more in terms of a number average molecular weight in addition copolymerization of a norbornene compound having a polar group and which is less dropped in an activity against a norbornene compound having a polar group.

Accordingly, an object of the present invention is to provide a catalyst composition for efficiently obtaining a high molecular weight addition copolymer of a norbornene compound having a polar group.
Further, an object of the present invention is to provide as well a process for producing a high molecular weight addition copolymer of a norbornene compound having a polar group by using the composition described above, a copolymer thereof and a film prepared by using the above copolymer.

That is, the present invention has achieved the objects described above by the following constitutions or structures. (1) A catalyst composition comprising a main catalyst (A) and a promoter (B) which are used for copolymerization of norbornene having a polar group, wherein the main catalyst (A) is a complex represented by Formula (1):

MLₙK1ₓK2_{y}K3_{z} (1)

(wherein M is one transition metal selected from group 8 elements, group 9 elements and group 10 elements in the periodic table; L is a cyclopentadienyl base ligand containing a cyclopentadiene ring; K1, K2 and K3 are anionic ligands or neutral ligands which are different from each other; n is an integer of 0 to 2; x, y and z each are an integer including 0, and a sum thereof is 1 to 7); and the promoter (B) is an ionic compound (a) which can be reacted with the main catalyst (A) to form a cationic transition metal compound.

(2) The catalyst composition as described in the above item (1), wherein in the main catalyst (A), M of Formula (1) is nickel. (3) The catalyst composition as described in the above item (1) or (2), wherein organoaluminum (b) is contained in the promoter (B), and the organoaluminum (b) is an organoaluminum compound represented by Formula (b):

AlR^{a}R^{b}R^{c} (b)

(wherein R^{a} and R^{b} are the same or different and are a hydrocarbon group having 1 to 10 carbon atoms or a hydrogen atom; R^{c} is a hydrocarbon group having 1 to 10 carbon atoms, provided that R^{c} may be the same as or different from R^{a} and R^{b}).
(4) The catalyst composition as described in any of the above items (1) to (3), wherein a phosphine base ligand (c) is contained in the promoter (B).
(5) The catalyst composition as described in any of the above items (1) to (4), wherein the promoter (a) is at least one or more compounds selected from tris(pentafluorophenyl)borane, trityltetrakis and N,N'-dimethylaniliniumtetrakis(pentafluorophenyl)borate.
(6) A process for producing norbornene base copolymer by using the catalyst composition as described in any of the above items (1) to (5).

(7) A norbornene base copolymer obtained by the production process as described in the above item (6), wherein it comprises monomer units represented by the following Formulas (2) and (3), and it has a number average molecular weight (Mn) of 300,000 to 2,000,000: 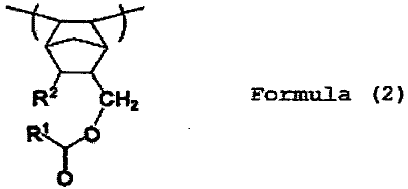 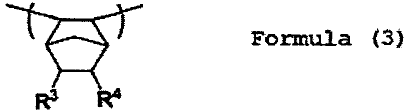 (wherein R¹ represents an alkyl group having 1 to 10 carbon atoms, and R², R³ and R⁴ may be different from each other and represent a hydrogen atom or an alkyl group having 1 to 10 carbon atoms).
(8) The norbornene base copolymer as described in the above item (7), comprising only the monomer units represented by Formulas (2) and (3).
(9) The norbornene base copolymer as described in the above item (7) or (8), wherein a molecular weight distribution (Mw/Mn) of a weight average molecular weight (Mw) to a number average molecular weight (Mn) falls in a range of 1.0 to 4.0.
(10) The norbornene base copolymer as described in the above item (7) or (8), wherein R¹ in Formula (2) is a methyl group.
(11) The norbornene base copolymer as described in the above item (7) or (8), wherein R¹ in Formula (2) and R³ and R⁴ in Formula (3) are hydrogen atoms.
(12) The norbornene base copolymer as described in the above item (7) or (8), wherein the monomer unit represented by Formula (2) is contained in a range of 10 to 70 % by mole.
(13) A heat resistant film prepared by molding the copolymer as described in any of the above items (7) to (12) into a film.

According to the catalyst composition of the present invention, a norbornene base copolymer of a high molecular weight having a polar group can efficiently be prepared. The above norbornene base copolymer has an excellent transparency, an excellent heat resistance, excellently low moisture absorption and an excellent electric insulation and can be used for many applications of optics, medical cares, abrasive materials, packaging materials, structural materials and the like. To be specific, it is used for optical molded articles such as lenses and polarizing films, electric insulating materials such as films, carrier tapes, film condensers, and flexible printed boards, medical vessels such as press-through packages, transfusion packs, liquid medicine vials, and syringes, food packaging molded articles such as wrapping films and trays, casings for electric appliances, automobile interior parts such as inner panels, building materials such as car ports and glazings, and the like.

### BRIEF DESCRIPTION of THE DRAWINGS

Fig. 1 is a ¹H-NMR spectrum of the norbornene base copolymer obtained in Example 1.
Fig. 2 is an IR spectrum of the norbornene base copolymer obtained in Example 1.
Fig. 3 is a ¹H-NMR spectrum of the norbornene base copolymer obtained in Example 2.
Fig. 4 is an IR spectrum of the norbornene base copolymer obtained in Example 2.
Fig. 5 is a chart of a gel permeation chromatograph (GPC) of the norbornene base copolymer obtained in Example 1.
Fig. 6 is a chart of a gel permeation chromatograph (GPC) of the norbornene base copolymer obtained in Example 2.

### DESCRIPTION of THE PREFERRED EMBODIMENTS

The catalyst composition of the present invention comprises the main catalyst (A) and the promoter (B) which are used for copolymerizing norbornene having a polar group.
The main catalyst (A) is a complex represented by Formula (1):

MLₙK1ₓK2_{y}K3_{z} (1)

In Formula (1), M is one transition metal selected from group 8 elements, group 9 elements and group 10 elements in the periodic table; L is a cyclopentadienyl base ligand containing a cyclopentadiene ring; K1, K2 and K3 are anionic ligands or neutral ligands which are different from each other; n is an integer of 0 to 2; x, y and z each are an integer including 0, and a sum thereof is 1 to 7.

The specific transition metal M of the main catalyst (A) of the present invention includes iron (Fe), cobalt (Co), nickel (Ni), ruthenium (Ru), rhodium (Rh), palladium (Pd), platinum (Pt) and the like. Among them, the preferred elements are cobalt, nickel, palladium and platinum from the viewpoint of enhancing a polymerization activity of the catalyst, and nickel and palladium are particularly preferred.

L containing a cyclopentadiene ring in Formula (1) is cyclopentadienyl itself and a cyclopentadienyl base ligand selected from derivatives thereof having such a substituent, and the like as exerting no influence on an effect provided by a ring thereof. The number n showing a number of the ligand L is an integer of 0 to 2.
The cyclopentadienyl derivative of the ligand L includes substituted cyclopentadienyl in which a hydrogen atom of cyclopentadienyl is substituted with substituents described later, indenyl, fluorenyl and the like. Further, the cyclopentadienyl derivative includes as well derivatives obtained by substituting hydrogen atoms of indenyl and fluorenyl with the same substituents.

The substituents of the substituted cyclopentadienyl include hydrocarbon groups having 1 to 20 carbon atoms, such as methyl, ethyl, n-propyl, isopropyl, n-butyl, t-butyl, phenyl, benzyl, and neopentyl; and hydrocarbon-substituted silyl groups such as trimethylsilyl, and the like.
Also, the substituents of the substituted cyclopentadienyl include substituents which have hetero atoms, for example, an oxygen atom, a nitrogen atom, a sulfur atom, a phosphorus atom, a halogen atom and the like and which show a polarity. The examples thereof include an RO group, an RCO group, an ROCO group, an RCOO group, an R₂N group, an R₂NCO group, an NC group, an RS group, an RCS group, an RSO group, an R₂S group and the like. In the above case, R represents a hydrocarbon group having 1 to 12 carbon atoms, and when plural R are present, they may be the same or different. The specific examples of R include alkyl groups such as methyl, ethyl, n-propyl, isopropyl, n-butyl, t-butyl, hexyl, and octyl, aryl groups such as phenyl, aralkyl groups such as benzyl, and the like. Among them, the alkyl groups having 1 to 4 carbon atoms are particularly preferred.
Further, the substituents of the substituted cyclopentadienyl group include methoxy, ethoxy, t-butoxy, acetyl, propionyl, dimethylamino, diethylamino, nitrile, dimethylaminocarbonyl and diethylaminocarbonyl.

In particular, the preferred examples of L are cyclopentadienyl, cyclopentadienyl having 1 to 5 methyl groups, phenylcyclopentadienyl, benzylcyclopentadienyl and indenyl.

K1, K2 and K3 in Formula (1) are anionic ligands or neutral ligands which are different from each other. The numbers x, y and z showing the number of the ligand are an integer including 0, and a sum thereof is 1 to 7. The numbers x, y and z are preferably 0 or 1.
The examples of a case in which K1, K2 and K3 are the anionic ligands include a hydrogen atom; an oxygen atom; halogen atoms such as fluorine, chlorine, bromine and iodine; linear or branched alkyl groups having 1 to 20 carbon atoms, such as methyl, ethyl, n-propyl, isopropyl, n-butyl, t-butyl, isobutyl, octyl, and 2-ethylhexyl; aryl groups, alkylaryl groups or arylalkyl groups having 6 to 20 carbon atoms, such as phenyl, tolyl, xylyl, and benzyl; a hydroxyl group; alkoxy groups having 1 to 20 carbon atoms, such as methoxy, ethoxy, propoxy, and butoxy; aryloxy groups having 6 to 20 carbon atoms, such as phenoxy, methylphenoxy, 2,6-dimethylphenoxy, and naphthyloxy; dialkylamino groups or diarylamino groups having alkyl substituents having 1 to 20 carbon atoms, such as dimethylamino, diethylamino, di(n-propyl)amino, di(isopropyl)amino, di(n-butyl)amino, di(t-butyl)amino, di(isobutyl)amino, diphenylamino, and methylphenylamino; a π - allyl group; substituted allyl groups having 3 to 20 carbon atoms; an acetylacetonate group; substituted acetylacetonate groups having 5 to 20 carbon atoms; hydrocarbon-substituted silyl groups such as trimethylsilyl; a carbonyl group; a carboxyl group, and the like.

The examples of a case in which K1, K2 and K3 are the neutral ligands include an oxygen molecule; a nitrogen molecule; ethylene; diethyl ether; ethers such as tetrahydrofuran; nitriles such as acetonitrile and benzonitrile; esters such as ethyl benzoate; amines such as triethylamine, 2,2-bipyridine, and phenanthroline; silicon-substituted hydrocarbon groups such as (trimethylsilyl)methyl; Lewis bases such as sulfoxides, isocyanides, phosphines, phosphonic acids, and thiocyanates; aromatic hydrocarbon groups such as benzene, toluene, and xylene; cyclic unsaturated hydrocarbons such as cycloheptatriene, cyclooctadiene, cyclooctatriene, cyclooctatetraene, and derivatives thereof, and the like.

All of K1, K2 and K3 in Formula (3) may be the anionic ligands, and all of them may be the neutral ligands. Or, any of them may be the anionic ligands, and the remainder may be the neutral ligands.

The specific examples of the main catalyst (A) represented by Formula (1) include cyclopentadienyl(methyl)(triphenylphosphine)nickel, methylcyclopentadienyl(methyl)(triphenylphosphine)nickel, pentamethylcyclopentadienyl(methyl)(triphenylphosphine)nickel, indenyl(methyl)(triphenylphosphine)nickel, fluorenyl(methyl)(triphenylphosphine)nickel, cyclopentadienyl(methyl)(tricyclohexylphosphine)nickel, pentamethylcyclopentadienyl(methyl)(tricyclohexylphosphine)-nickel, indenyl(methyl)(tricyclohexylphosphine)nickel, fluorenyl(methyl)(tricyclohexylphosphine)nickel, bisindenylnickel, cyclopentadienyl(π-allyl)palladium, methylcyclopentadienyl(π-allyl)palladium, pentamethylcyclopentadienyl(π-allyl)palladium, indenyl(π-allyl) palladium, fluorenyl(π-allyl)palladium and the like.

The above transition metal complexes represented by Formula (1) can be prepared by, for example, a method described in Shaw. B. L., Proc. Chem. Soc., 1960, 247.

The promoter (B) used in the present invention is an ionic compound (a) which can be reacted with the main catalyst (A) to form a cationic transition metal compound. They may be used in combination.

### <Ionic compound (a)>

The ionic compound (a) which can be reacted with the main catalyst (A) to form a cationic transition metal compound includes ionic compounds obtained by combining the following non-coordinating anions and cations.
The non-coordinating anions include, for example, tetra(phenyl)borate, tetra(fluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenylpentafluorophenyl)borate, [tris(pentafluorophenyl)phenyl]borate, tridecahydride-7,8-dicarbaundecaborate and the like.

The cations described above include carbonium cations, oxonium cations, ammonium cations, phosphonium cations, cycloheptyltrienyl cations, ferrocenium cations having transition metals and the like.
The specific examples of the carbonium cations include trisubstituted-carbonium cations such as triphenylcarbonium cation and tri-substituted-phenylcarbonium cations.
The specific examples of the tri-substituted-phenylcarbonium cations include tri(methylphenyl)carbonium cation and tri(dimethylphenyl)carbonium cation.

The specific examples of the ammonium cations include trialkylammonium cations such as trimethylammonium cation, triethylammonium cation, tripropylammonium cation, tributylammonium cation, and tri(n-butyl)ammonium cation, N,N-dialkylanilinium cations such as N,N-diethylanilinium cation, and N,N-2,4,6-pentamethylanilinium cation and dialkylammonium cations such as di(isopropyl)ammonium cation, and dicyclohexylammonium cation and the like.

The specific examples of the phosphonium cations include triarylphosphonium cations such as triphenylphosphonium cation, tri(methylphenyl)phosphonium cation, and tri(dimethylphenyl)phosphonium cation.

The preferred examples of the ionic compound include trityl tetrakis(pentafluorophenyl)borate, triphenylcarbonium tetra(fluorophenyl)borate, N,N-dimethylanilinium tetrakis(pentafluorophenyl)borate, 1,1'-dimethylferrocenium tetrakis(pentafluorophenyl)borate and the like.

Also, the organoaluminum (b) is preferably contained in the promoter.

### <Organoaluminum compound (b)>

The organoaluminum (b) used in the present invention is preferably an organoaluminum compound represented by Formula (b):

AlR^{a}R^{b}R^{c} (b)

wherein R^{a} and R^{b} are the same or different and are a hydrocarbon group having 1 to 10 carbon atoms or a hydrogen atom; R^{c} is a hydrocarbon group having 1 to 10 carbon atoms, provided that R^{c} may be the same as or different from R^{a} an R^{b}.

The organoaluminum compound includes trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminium hydride, dihexylaluminum hydride, diisohexylaluminum hydride, dioctylaluminum hydride, diisooctylaluminum hydride; ethylaluminum dihydride, n-propylaluminum dihydride, isobutylaluminum dihydride and the like. Among them, triethylaluminum, triisobutylaluminum, diethylaluminum hydride and diisobutylaluminum hydride are preferred. The foregoing organoaluminum compounds as the component (B) can be used alone or in a mixture of two or more kinds thereof.

Further, a phosphine base ligand (c) is preferably contained as the promoter (B).

### <Phosphine base ligand (c)>

The specific phosphine base ligand (c) includes trialkylphosphines such as trimethylphosphine and triethylphosphine, tricycloalkylphosphines such as tricyclopentylphosphine and tricyclohexylphosphine and triarylphosphines such as triphenylphosphine, and the like.

It is one of the preferred embodiments to produce the norbornene base copolymer by using the main catalyst (A) in the preferred specific catalyst composition of the present invention, in which in Formula (1), M is nickel (Ni) or palladium (Pd) and in which L is cyclopentadienyl or indenyl and by using tris(pentafluorophenyl)borane [B(C₆F₅)₃], trityl tetrakis (pentafluorophenyl)borate [Ph₃C][B(C₆F₅)₄] or methylaluminoxane (MAO) as the promoter (B). Also, tricyclohexylphosphine is preferably used as the phosphine base ligand.

It is the most preferred embodiment to produce the norbornene base copolymer by using the complex in which in Formula (1), M is nickel (Ni) or palladium (Pd), in which L is cyclopentadienyl and the other ligands are methyl (CH₃) or allyl (C₃H₅) as the main catalyst (A) and by using tris(pentafluorophenyl)borane [B(C₆F₅)₃] or trityl tetrakis(pentafluorophenyl) borate [Ph₃C][B(C₆F₅)₄] as the promoter (B).

Process for producing norbornene base copolymer by using catalyst composition of the present invention:
A norbornene base copolymer may be polymerized by using the catalyst composition of the present invention by either bulk polymerization or solution polymerization. When it is polymerized in a solution, a solvent which does not exert an adverse influence on the catalytic activity has to be used.
The solvent which can be used includes aliphatic hydrocarbons such as pentane, hexane, and heptane; alicyclic hydrocarbons such as cyclohexane; aromatic hydrocarbons such as benzene, toluene, and xylene; halogenated hydrocarbons such as dichloromethane, chloroform, and chlorobenzene; nitrogen-containing hydrocarbons such as nitromethane, nitrobenzene, and acetonitrile; and ethers such as diethyl ether, dioxane, and tetrahydrofuran. The above solvents may be used in a mixture.

In the catalyst composition of the present invention, a use ratio of the main catalyst (A) to the promoter (B) is varied according to various conditions and therefore is not unambiguously determined, and it is 1/0.1 to 1/10,000, preferably 1/0.5 to 1/5,000 and more preferably 1/1 to 1/2,000 in terms of (A)/(B) (molar ratio).

In the process for producing the norbornene base copolymer by using the catalyst composition of the present invention, the polymerization temperature shall not specifically be restricted as well and is usually -100 to 150 °C, preferably -50 to 120 °C. If the temperature is too low, the polymerization rate becomes slow, and if it is too high, catalytic activity is dropped. The polymerization rate and the molecular weight can be controlled by selecting the polymerization temperature in the ranges described above.

The polymerization time shall not specifically be restricted as well and is, for example, 1 minute to 100 hours. Also, the reaction is carried out preferably under the atmosphere of an inert gas such as a nitrogen gas.
After complete of the polymerization reaction, the product of the norbornene base copolymer is subjected to workup by publicly known operations and treating methods (for example, reprecipitation and the like) and separated by filtrating, and then it is isolated by drying.

Monomer unit of norbornene base used for catalyst composition of the present invention and polymer thereof:
The catalyst composition of the present invention is used for a norbornene base monomer unit. It is used preferably for a monomer containing a norbornene base monomer having a polar group. In particular, when the catalyst composition is applied to combinations of norbornene base monomer units containing a norbornene compound in which one methylene chain is introduced between a norbornene skeleton and an ester group in order to expand a distance between a polymerizable carbon-carbon double bond and a polar group (ester group), a norbornene base copolymer having a polar group can be produced efficiently in a high molecular weight, and therefore it is preferred.

In particular, the norbornene base monomer unit having a polar group described above includes a norbornene base monomer represented by the following Formula (2). Also, in addition to the above norbornene base monomer unit having a polar group, a conventional norbornene base monomer can be copolymerized therewith, and a norbornene base monomer represented by, for example, the following Formula (3) is preferably used.

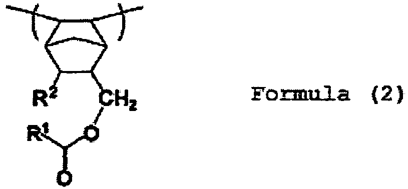

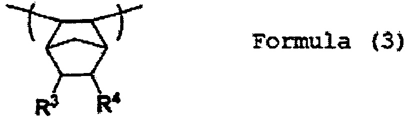

That is, the norbornene base copolymer of the present invention containing the norbornene base monomer units represented by Formulas (2) and (3) is obtained by the production process described above using the catalyst composition of the present invention. In particular, the norbornene base copolymer of the present invention has preferably a number average molecular weight (Mn) of 300,000 to 2,000,000.

In this regard, R¹ in Formulas (2) and (3) represents an alkyl group having 1 to 10 carbon atoms, and R², R³ and R⁴ may be different from each other and represent a hydrogen atom or an alkyl group having 1 to 10 carbon atoms. Also, among the alkyl groups having 1 to 10 carbon atoms represented by R¹ in Formula (2), the alkyl groups having 3 to 10 carbon atoms may be linear or branched.

The examples of the linear alkyl group include methyl, ethyl, n-propyl, n-butyl, n-pentyl, n-hexyl, n-octyl, n-decyl and the like. The examples of the branched alkyl group include isopropyl, isobutyl, sec-butyl, neopentyl, isohexyl, isooctyl, isodecyl and the like.

Among them, R¹ is preferably the alkyl groups having 1 to 3 carbon atoms in terms of the economic efficiency. Methyl is particularly preferred from the viewpoint of the monomer production cost.

R² in Formula (2) and R³ and R⁴ in Formula (3) each represent independently a hydrogen atom or an alkyl group having 1 to 10 carbon atoms, and an alkyl group having 3 to 10 carbon atoms may be branched. The above alkyl groups include the same groups as the foregoing alkyl groups represented by R¹. Among them, R², R³ and R⁴ are preferably hydrogen atoms from the viewpoint of the monomer production cost.

When R² is a hydrogen atom, the norbornene base monomer which is a base material of the monomer unit represented by Formula (2) is 2-acetoxymethyl-5-norbornene when R¹ is a linear alkyl group having one carbon atom, 2-[(ethylcarbonyloxy)methyl]-5-norbornene when R¹ is a linear alkyl group having two carbon atoms and 2-[(propylcarbonyloxy)methyl]-5-norbornene when R¹ is a linear alkyl group having three carbon atoms.
When R³ and R⁴ are hydrogen atoms, the norbornene base monomer which is a base material of the monomer unit represented by Formula (3) is norbornene.

In the norbornene base copolymer described above, a content of the monomer unit represented by Formula (2) is preferably 10 to 70 % by mole. If a content of the monomer unit represented by Formula (2) is less than 10 % by mole, the copolymer is enhanced in hydrophobicity and decreased in solubility in an organic solvent, but it tends to be decreased in moisture absorption. On the other hand, if it exceeds 70 % by mole, the copolymer is provided with hydrophilicity and enhanced in solubility in an organic solvent, but it tends to be increased in moisture absorption.
Accordingly, solubility in a solvent and moisture absorption of the copolymer can be tuned by adjustment of a content of the monomer unit represented by Formula (2).

From the viewpoint of allowing a low moisture absorption to be consistent with a suitable solubility required when the norbornene base copolymer described above is molded into a film, a sheet and the like, a content of the monomer unit represented by Formula (2) is preferably 10 to 80 % by mole, more preferably 15 to 70 % by mole and further preferably 20 to 60 % by mole. A content of the monomer unit represented by Formula (2) can be calculated from an integrated intensity in a ¹H-NMR spectrum for a solution of the powder-like or film-like copolymer dissolved in a suitable deuterated solvent.

Basically, the norbornene base copolymer described above is preferably constituted only by the monomer units represented by Formula (2) and Formula (3). In the above case, however, a third monomer unit can be allowed to be contained in such a very small amount, for example, 1 % by mole or less that the properties of the norbornene base copolymer described above are scarcely changed.
Also, the norbornene base copolymer described above may contain the third monomer unit in order to improve the properties thereof as a far as the effects thereof are not damaged. The third monomer unit shall not specifically be restricted, and monomers having an ethylene-like carbon-carbon double bond are preferred. Among them, olefin compounds such as ethylene, propylene, and 1-butene and aromatic vinyl compounds such as styrene are preferred.

In the norbornene base copolymer described above, a copolymerization mode of the respective monomer units can take any of a random mode, a block mode and an alternate mode according to the polymerization conditions, and it is preferably a random mode from the viewpoint of improving the physical properties of the copolymer.

A polystyrene standard number average molecular weight (Mn) of the norbornene base copolymer described above which is measured by a gel permeation chromatographic (GPC) method is 300,000 to 2,000,000. Further, it is more preferably 500,000 to 1,500,000. If the polystyrene standard number average molecular weight is less than 300,000, the mechanical strength is unsatisfactory. If the polystyrene standard number average molecular weight exceeds 2,000,000, not only the solubility into a solvent becomes poor when a cast film is molded, but also the solution viscosity grows high, and the molding processability becomes worse. Also, a molecular weight distribution Mw/Mn (weight average molecular weight/number average molecular weight) thereof is preferably 1.00 to 4.00, more preferably 1.50 to 3.50 and further preferably 1.80 to 3.00.
If the molecular weight distribution is large, the solution for molding a cast film is less liable to be homogeneous, and therefore the good film is less liable to be prepared.

A glass transition temperature (Tg) of the norbornene base copolymer described above is varied according to the kind of the constitutional monomer units of the copolymer, the composition ratios thereof and the presence of the additives, and it is usually 80 to 350 °C, preferably 100 to 320 °C and more preferably 120 to 300 °C. If Tg is lower than the ranges described above, the thermal deformation temperature is lowered, and a problem is likely to be brought about on the heat resistance. Further, the resulting optical film is increased in a certain case in a change of temperature dependent optical property. On the other hand, if Tg is raised higher than the ranges described above, the resin is likely to be thermally degraded when heated to the vicinity of Tg in stretching process.

The norbornene base copolymer described above can be blended with publicly known thermoplastic resins, thermoplastic elastomers, rubber-like polymers, organic fine particles, inorganic fine particles, antioxidants, UV absorbers, mold releasing agents, flame retardants, antibacterial agents, wood powders, coupling agents, petroleum resins, plasticizers, colorants, lubricants, antistatic agents, silicone oils, foaming agents and the like as long as a transparency and a heat resistance are not damaged.

The thermoplastic resins include high density polyethylene, low density polyethylene, linear low density polyethylene, polypropylene, polystyrene, polyvinyl chloride and the like.
Various thermoplastic elastomers of an olefin base and a styrene base can be used as the thermoplastic elastomers.

The rubber-like polymers include acryl rubber, acrylonitrile-butadiene rubber, isoprene rubber, urethane rubber, ethylene-propylene rubber, epichlorohydrin rubber, chloroprene rubber, styrene-butadiene rubber, butadiene rubber, polyisobutylene, silicone rubber, fluororubber and the like.

Various fine particles obtained from various polymer emulsions can be used as the organic fine particles. The inorganic fine particles include fine particles of copper, silver, nickel, palladium, alumina, zirconia, titanium oxide, barium titanate, aluminum nitride, silicon nitride, boron nitride, silicate glass, CaO•Al₂O₃•SiO₂ base inorganic glass, silicon compounds, various carbon blacks, metal complexes and the like.

Capable of being used as the antioxidants are phenol base antioxidants such as 2,6-di-tert-butyl-4-methylphenol, tetrakis[methylene-3-(3',5'-di-tert-butyl-4-hydroxyphenyl)propionate]methane and the like, sulfur base antioxidants such as dilauryl-3,3'-thiodipropionate and the like and phosphorus base antioxidants such as trisnonylphenyl phosphite and the like.

The UV absorber include triazoles such as 2-(2'-hydoxy-tert-butylphenyl)benzotriazole, benzophenones such as 2,4-dihydroxybenzophenone, salicylates such as 4-tert-butylphenyl salicylate and the like, hindered amines such as bis-(2,2,6,6-tetramethyl-4-piperidinyl) sebacate and the like.

The mold releasing agents include stearic acid, butyl stearate, zinc stearate, stearamide, fluorine base compounds, silicon base compounds and the like.

Capable of being used as the flame retardants are bromo base flame retardants such as tetrabromobisphenol A, decabromodiphenyl ether, bis(tetrabromophthalimide)ethane, and bis(pentabromophenyl)ethane, phosphorus base flame retardants such as triphenyl phosphate, cresyl diphenyl phosphate, tricresyl phosphate, and trixylenyl phosphate, inorganic flame retardants such as antimony trioxide, antimony pentaoxide, and magnesium hydroxide.

The antibacterial agents include penicillin base antibacterial agents, cephem base antibacterial agents, aminoglycoside base antibacterial agents, macrolide base antibacterial agents, tetracycline base antibacterial agents, new quinolone base antibacterial agents and the like.

The coupling agents include silane base coupling agents, titanium base coupling agents, aluminate base coupling agents and the like.
The petroleum resins include aromatic petroleum resins which are polymers of C9 base petroleum fractions such as vinyltoluene, alkylstyrene, and indene, aliphatic petroleum resins which are polymers of C5 base petroleum fractions such as isoprene and cyclopentadiene.

The plasticizers include phthalate esters, adipate esters, trimellitate esters, phosphate esters, citrate esters, sebacate esters, azelate esters, maleate esters, benzoate esters, epoxidated vegetable oils, polyesters and the like.

The colorants include organic pigments such as anthraquinone base pigments, azo base pigments, carbonium base pigments, quinoline base pigments, quinoneimine base pigments, indigoid base pigments, and phthalocyanine base pigments, organic dyes such as azoic dyes and sulfide dyes and inorganic pigments such as titanium yellow, yellow iron oxide, zinc yellow, chromium orange, molybdenum red, cobalt purple, cobalt blue, cobalt green, chromium oxide, titanium oxide, zinc sulfide, and carbon black.

The lubricants include hydrocarbon base lubricants such as liquid paraffin, paraffin wax, and polyethylene wax and aliphatic lubricants such as stearyl alcohol, stearic acid, and 12-hydroxystearic acid.

The antistatic agents include glycerin monofatty acid esters, acetylated monoglyceride, organic acid monoglyceride, medium chain fatty acid triglyceride, diglycerin fatty acid esters, polyglycerin fatty acid esters, sorbitan fatty acid esters, propylene glycol fatty acid esters, fatty alcohol fatty acid esters, ethylene oxide adducts and the like.

The silicone oils include dimethyl silicone oil, methyl hydrogen silicone oil, methyl phenyl silicone oil, cyclic dimethyl silicone oil and the like.

The foaming agents include inorganic foaming agents such as ammonium carbonate and sodium bicarbonate and organic foaming agents such as azodicarbonamide, N,N'-dinitrosopentamethylenetetramine, and 4,4'-oxybis(benzenesulfonylhydrazide).

The norbornene base copolymer represented by Formula (2) is subjected to film formation by a solvent casting method (solution casting method) and can be processed into a film. Toluene, tetrahydrofuran (THF), dichloromethane, chloroform and the like can be used as the solvent.

### EXAMPLES

The present invention shall be explained below in further details with reference to examples and comparative examples, but the present invention shall by no means be restricted by these explanations.

A weight average molecular weight (Mw), a number average molecular weight (Mn) and a molecular weight distribution (Mw/Mn) of the polymers obtained in the respective examples were determined by a gel permeation chromatography (GPC) using polystyrene as a standard material. Further, the composition ratios of norbornene and 2-acetoxymethyl-5-norbornene contained in the copolymers were determined from the integrated ratios of peaks [δ: 3.5 to 4.5 ppm, a ┌ -COOCH₂┘ unit of 2-acetoxymethyl-5-norbornene and δ: 0.5 to 3.0 (┌ -CH₃COO┘ , ┌ -CH₂┘ and ┌ -CH₌┘ units of norbornene and 2-acetoxymethyl-5-norbornene)] obtained by ¹H-NMR.

Various physical properties of the substances synthesized in the examples were measured in the following manners.
1. ¹H-NMR and ¹³C-NMR:
   Kind of equipment used: JEOL EX-400 (400 MHz, manufactured by JEOL Ltd.)
   Measuring method: measured by dissolving the sample in deuterated chloroform and using tetramethylsilane as an internal standard substance.
2. FT-IR:
   Kind of equipment used:
   system: Spectrum GX (manufactured by Perkin Elmer Co., Ltd.)
   ATR: MIRacle ™ (manufactured by Pike Technologies, Inc.) Measuring method: measured by a one reflection ATR method
3. Gel permeation chromatograph (GPC):
   Kind of equipment used:
      column: Shodex GPC K-G+KF-806L×2 (manufactured by Showa Denko K.K.)
      detector: Shodex SE-61 (manufactured by Showa Denko K.K.) Measuring conditions:
      solvent: tetrahydrofuran
   measuring temperature: 40 °C
   flow rate: 1.0 ml/minute
   sample concentration: 1.0 mg/ml
   injected amount: 1.0 µl
   calibration curve: Universal Calibration Curve
   analytical program: SIC 480II (manufactured by System Instruments Co., Ltd.)

### 4. Tensile test (strength, elongation)

Kind of equipment used: 5582 type universal material tester (manufactured by Instron In.)
Test method: measured according to JIS K 7162
Test piece form: 5A form, thickness: about 0.03 mm

### Measuring conditions:

measuring temperature: 23 °C
test speed: 2 mm/minute
chuck-to-chuck distance: 50 mm

5. Total light transmittance:
Measured according to ASTM D1003.

6. Glass transition temperature (Tg):
Measured by a peak temperature in temperature dispersion of a ratio (E"/E') of a loss modulus (E") to tan δ (storage modulus (E')) measured by a dynamic viscoelasticity. The dynamic viscoelasticity was measured by measuring a peak temperature of tan δ on the conditions of a measuring frequency of 10 Hz, a programming rate of 4 °C/minute, an excitation mode of a single waveform and an excitation amplitude of 2.5 µm by means of a Rheovibron DDV-01FP (manufactured by Orientec Co., Ltd.).

### Synthesis of bisindenylnickel (catalyst synthesis):

A glass-made flask of 300 mL was charged with indene (10 g, 86 mmol, manufactured by Kanto Chemical Co., Inc.) dissolved in 150 mL of hexane and cooled down to -78 °C. Butyllithium (2.67M hexane solution, 32 ml, 85 mmol, manufactured by Kanto Chemical Co., Inc.) was slowly and dropwisely added into the flask, and the solution was left back to room temperature and stirred overnight. The reaction solution was filtrated through a glass filter to wash the residue several times with hexane, and the resulting white powder was dried under reduced pressure to obtain indenyllithium in a yield of 80 %. Indenyllithium (1.5 g, 12.3 mmol) thus obtained and nickel acetylacetonate (1.6 g, 6.2 mmol, manufactured by Kanto Chemical Co., Inc.) each were dissolved in 100 ml of toluene, and the solutions were mixed in a glass-made flask of 300 mL and stirred at room temperature overnight. After removing the solvent in vacuo, the residue was dissolved in 200 ml of toluene, and the solution was filtrated through a glass filter. The filtrate was concentrated under reduced pressure to obtain expected bisindenylnickel in a yield of 80 % as red crystals. The compound was characterized by ¹H-NMR (C₆D₆) . δ 6.83 (s, 1H), 6.38 - 6.44 (d, 4H), 5.05 (s, 2H).

### Synthetic Example 1: synthesis of 2-acetoxymethyl-5-norbornene

A stainless steel-made autoclave of 1 L was charged with dicyclopentadiene (165.00 g, 1.248 mol, manufactured by Wako Pure Chemical Industries, Ltd.), allyl acetate (312.40 g, 3.120 mol, manufactured by Tokyo Chemical Industry Co., Ltd.) and hydroquinone (0.50 g, 0.0045 mol, manufactured by Wako Pure Chemical Industries, Ltd.). After replacing the system with nitrogen gas, the autoclave was heated up to 180 °C while stirring at 400 rpm to react the mixture for 5 hours. After complete of the reaction, the autoclave was cooled down to room temperature, and the content was transferred into a distillation equipment and distilled under reduced pressure to obtain 207.56 g of a colorless transparent liquid as a fraction of 0.9 MPa at 38°C.
¹H-NMR of the liquid thus obtained was measured to confirm that it was targeted 2-acetoxymethyl-5-norbornene. Also, a molar ratio of an exo-isomer and an endo-isomer of 2-acetoxymethyl-5-norbornene was *exo*/*endo* = 80/20.

### Example 1

Norbornene (4.7 g, 0.05 mol, manufactured by Tokyo Chemical Industry Co., Ltd.) and 2-acetoxymethyl-5-norbornene (8.3 g, 0.05 mol) were mixed in a glass-made polymerization bottle of 200 mL under nitrogen atmosphere to prepare a monomer solution. On the other hand, a 10 mL glass ampoule was charged with bisindenylnickel (5.9 mg, 20 µmol), tris (pentafluorophenyl) borane [B(C₆F₅)₃] (30.7 mg, 6 µmol) and trimethylaluminum (2.0M toluene solution, 0.05 ml, 100 µmol, manufactured by Sigma-Aldrich Japan K. K.) in a glove box under nitrogen atmosphere, and they were dissolved in 5 mL of dehydrated toluene. Immediately, the ampoule was taken out from the glove box, and a whole amount thereof was added to the polymerization bottle to start polymerization. The polymerization was carried out at room temperature for 3 hours, and the reaction was quenched by addition of the reaction liquid into a large amount of methanol to precipitate a polymer. The polymer was separated by filtrating and washed, and then it was dried at 60°C for 5 hours under reduced pressure to obtain 11.6 g of polymer as a white powder.

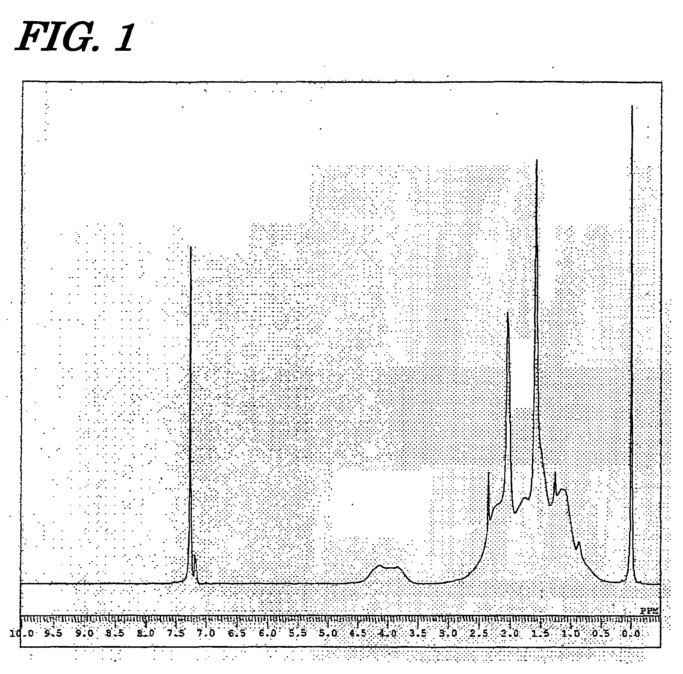

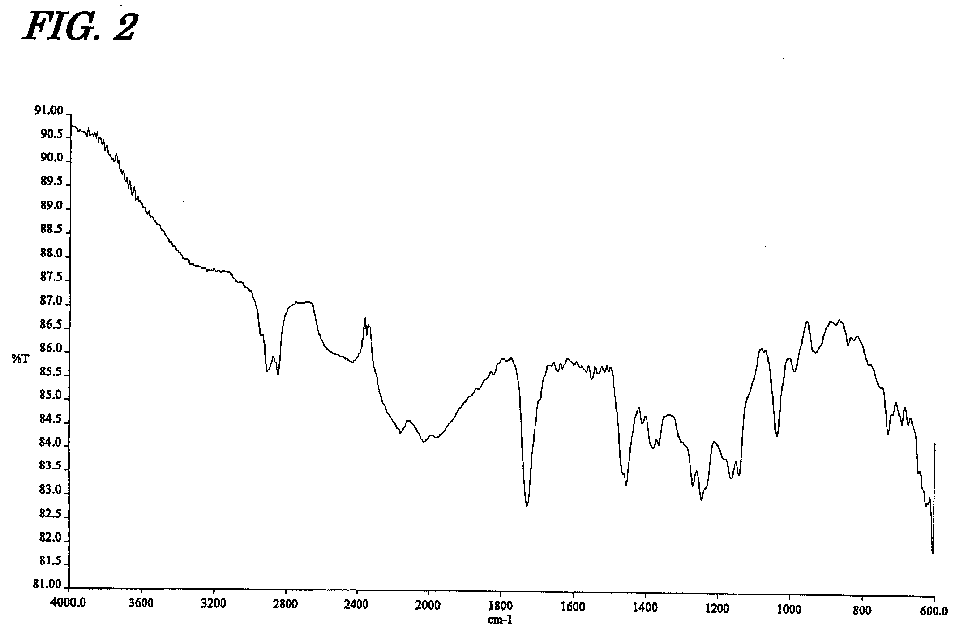

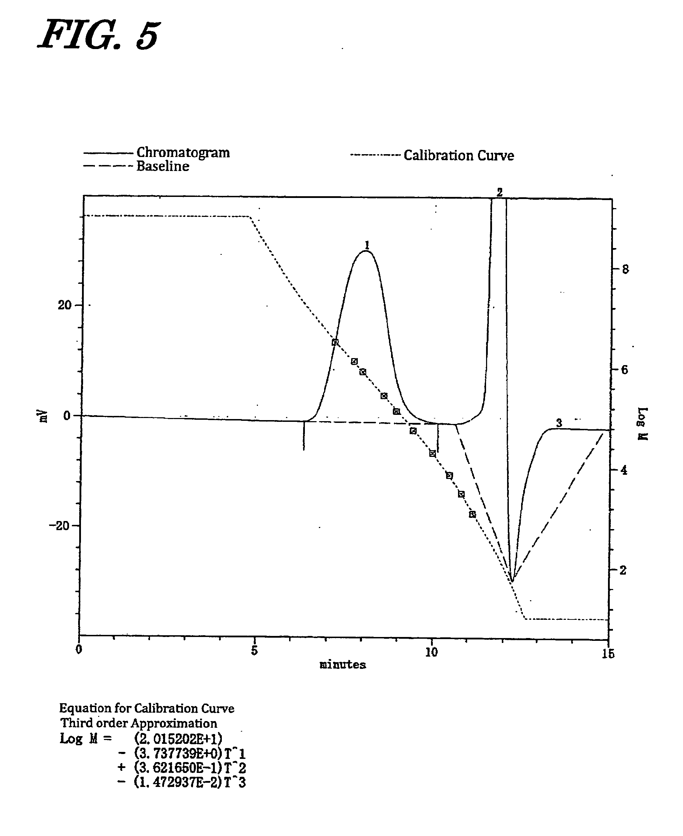

The polymer thus obtained was readily soluble in a conventional organic solvent such as THF and chloroform, and it had a number average molecular weight Mn of 455,000 and Mw/Mn of 2.80 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 32.1 % by mole. Shown are a ¹H-NMR spectrum in Fig. 1, an IR spectrum in Fig. 2 and a GPC chart in Fig. 5.

Further, the above polymer was dissolved in toluene so that a concentration of the solution was 10 wt %, and the solution was filtrated through a gauze. Then, it was applied on a polyethylene terephthalate (PET) film and dried at 120 °C for 10 hours to obtain a cast film. This cast film had a total light transmittance of 91.7 %, a tensile breaking strength of 37.7 MPa, a rupture elongation of 2.4 % and Tg of 252 °C. They are shown in Table 1. The film is excellent in a total light transmittance and a heat resistance.

### Example 2

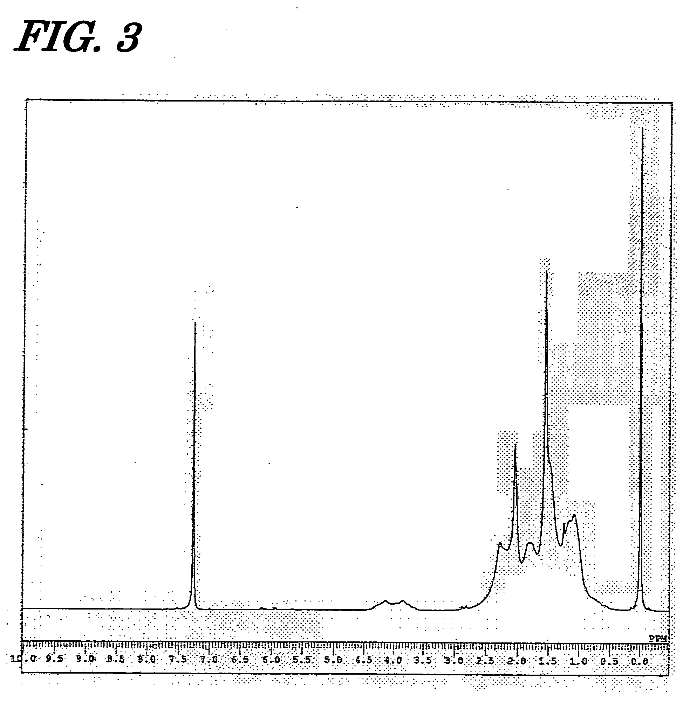

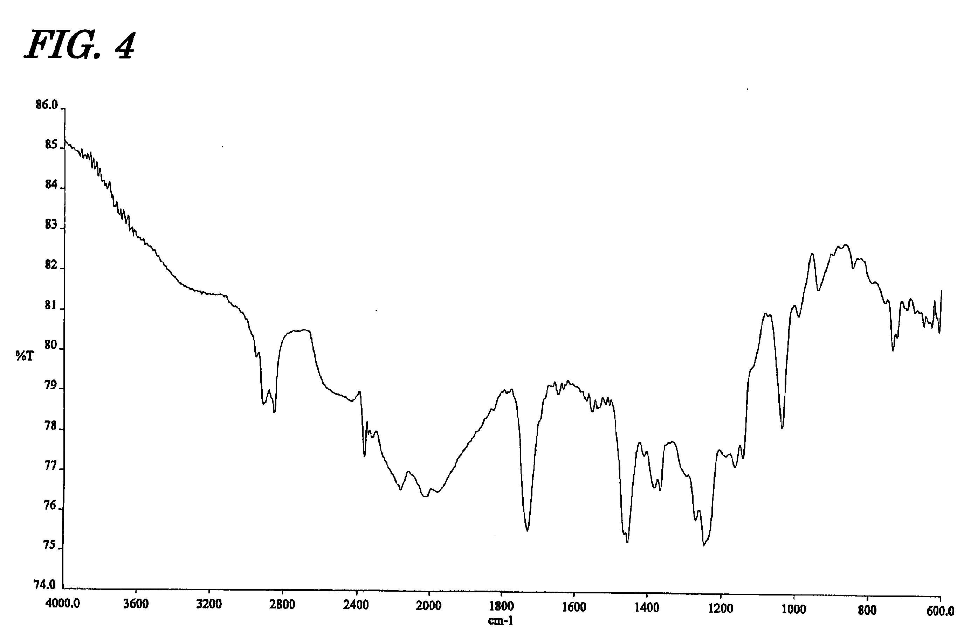

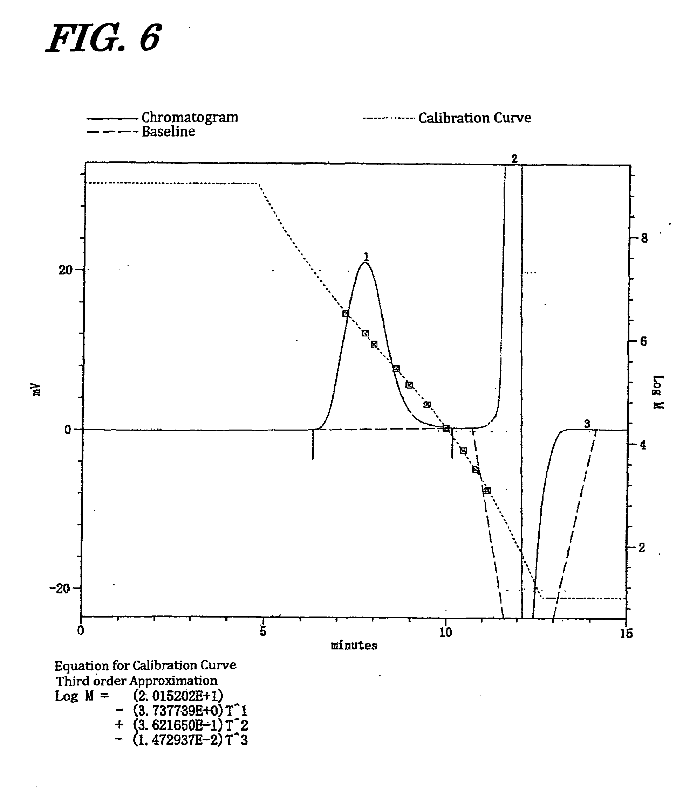

The polymerization was carried out by the same method as in Example 1 to obtain 11.8 g of a polymer, except that norbornene and 2-acetoxymethyl-5-norbornene were used each in an amount of 10.0 g.
The polymer thus obtained was readily soluble in a conventional organic solvent such as THF and chloroform, and it had a number average molecular weight Mn of 622,000 and Mw/Mn of 2.72 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 18.7 % by mole. Shown are a ¹H-NMR spectrum in Fig. 3, an IR spectrum in Fig. 4 and a GPC chart in Fig. 6

Further, the above polymer was dissolved in toluene so that a concentration of the solution was 10 wt %, and the solution was filtrated through a gauze. Then, it was applied on a polyethylene terephthalate (PET) film and dried at 120 °C for 10 hours to obtain a cast film. This cast film had a total light transmittance of 91.8 %, a tensile breaking strength of 42.9 MPa, a rupture elongation of 2.2 % and Tg of 242 °C. They are shown in Table 1. The film is excellent in a total light transmittance and a heat resistance.

### Example 3

A 1 L three neck flask equipped with a three-way cock and a mechanical stirrer was substituted with nitrogen and charged with a solution obtained by dissolving norbornene (23.5 g, 0.25 mol, manufactured by Tokyo Chemical Industry Co., Ltd.) in 27.2 mL of toluene and 2-acetoxymethyl-5-norbornene (41.5 g, 0.25 mol) under nitrogen. On the other hand, a 50 mL glass ampoule was charged with bisindenylnickel (28.9 mg, 100 µmol), tris(pentafluorophenyl)borane [B(C₆F₅)₃] (153.6 mg, 300 µmol) and trimethylaluminum (2.0 M toluene solution, 0.25 mL, 500 µmol, manufactured by Sigma-Aldrich Japan K. K.) in a glove box under nitrogen, and they were dissolved in 35 mL of dehydrated toluene. Immediately, the ampoule was taken out from the glove box, and a whole amount thereof was added to the three neck flask to start polymerization. The polymerization was carried out at room temperature for 3 hours, and during the polymerization period, each 100 mL of toluene was added thereto when 1 hour and 2 hours passed after initiating the polymerization. The reaction was quenched by addition of the reaction liquid into a large amount of methanol to precipitate a polymer. The polymer was separated by filtrating and washed, and then it was dried at 80°C for 5 hours under reduced pressure to obtain 20.2 g of a polymer as a white powder.

The polymer thus obtained was readily soluble in a conventional organic solvent such as THF and chloroform, and it had a number average molecular weight Mn of 1,018,000 and Mw/Mn of 3.10 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 29.1 % by mole.

### Example 4

The polymerization was carried out by the same method as in Example 3 to obtain 17.9 g of a polymer, except that used were a solution obtained by dissolving norbornene (33.0 g, 0.35 mol, manufactured by Tokyo Chemical Industry Co., Ltd.) in 38.2 mL of toluene and 2-acetoxymethyl-5-norbornene (24.9 g, 0.15 mol).

The polymer thus obtained was readily soluble in a conventional organic solvent such as THF and chloroform, and it had a number average molecular weight Mn of 803,000 and Mw/Mn of 3.55 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 15.2 % by mole.

### Example 5

The polymerization was carried out by the same method as in Example 3 to obtain 27.5 g of a polymer, except that the polymerization was carried out at 40 °C.

The polymer thus obtained was readily soluble in a conventional organic solvent such as THF and chloroform, and it had a number average molecular weight Mn of 683,000 and Mw/Mn of 2.81 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 29.9 % by mole.

### Example 6

The polymerization was carried out by the same method as in Example 3 to obtain 29.4 g of a polymer, except that used were a solution obtained by dissolving norbornene (33.0 g, 0.35 mol, manufactured by Tokyo Chemical Industry Co., Ltd.) in 38.2 mL of toluene and 2-acetoxymethyl-5-norbornene (24.9 g, 0.15 mol) and that the polymerization was carried out at 40 °C.
The polymer thus obtained was readily soluble in a conventional organic solvent such as THF and chloroform, and it had a number average molecular weight Mn of 597,000 and Mw/Mn of 3.53 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 16.9 % by mole.

### Example 7

The polymerization was carried out by the same method as in Example 3 to obtain 23.7 g of a polymer, except that the polymerization was carried out at 50 °C.
The polymer thus obtained was readily soluble in a conventional organic solvent such as THF and chloroform, and it had a number average molecular weight Mn of 568,000 and Mw/Mn of 2.64 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 29.2 % by mole.

### Example 8

The polymerization was carried out by the same method as in Example 3 to obtain 13.8 g of a polymer, except that used were a solution obtained by dissolving norbornene (33.0 g, 0.35 mol, manufactured by Tokyo Chemical Industry Co., Ltd.) in 38.2 mL of toluene and 2-acetoxymethyl-5-norbornene (24.9 g, 0.15 mol) and that the polymerization was carried out at 50 °C.
The polymer thus obtained was readily soluble in a conventional organic solvent such as THF and chloroform, and it had a number average molecular weight Mn of 382,000 and Mw/Mn of 2.94 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 15.7 % by mole.

Further, the above polymer was dissolved in toluene so that a concentration of the solution was 10 wt %, and the solution was filtrated through a gauze. Then, it was applied on a polyethylene terephthalate (PET) film and dried at 120 °C for 10 hours to obtain a cast film. This cast film had a total light transmittance of 91.8 %, a tensile breaking strength of 63.1 MPa, a rupture elongation of 5.0 % and Tg of 260 °C. They are shown in Table 1. The film is excellent in a total light transmittance and a heat resistance.

### Example 9

The polymerization was carried out by the same method as in Example 3 to obtain 30.3 g of a polymer, except that the polymerization was carried out at 60 °C.
The polymer thus obtained was readily soluble in a conventional organic solvent such as THF and chloroform, and it had a number average molecular weight Mn of 481,000 and Mw/Mn of 2.43 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 32.8 % by mole.

Further, the above polymer was dissolved in toluene so that a concentration of the solution was 8 wt %, and the solution was filtrated through a gauze. Then, it was applied on a polyethylene terephthalate (PET) film and dried at 120 °C for 10 hours to obtain a cast film. This cast film had a total light transmittance of 91.2 %, a tensile breaking strength of 54.8 MPa, a rupture elongation of 4.9 % and Tg of 253 °C. They are shown in Table 1. The film is excellent in a total light transmittance and a heat resistance.

### Example 10

The polymerization was carried out by the same method as in Example 3 to obtain 15.6 g of a polymer, except that used were a solution obtained by dissolving norbornene (33.0 g, 0.35 mol, manufactured by Tokyo Chemical Industry Co., Ltd.) in 38.2 mL of toluene and 2-acetoxymethyl-5-norbornene (24.9 g, 0.15 mol) and that the polymerization was carried out at 60 °C.
The polymer thus obtained was readily soluble in a conventional organic solvent such as THF and chloroform, and it had a number average molecular weight Mn of 386,000 and Mw/Mn of 2.82 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 15.5 % by mole.

### Example 11

Norbornene (3.6 g, 0.038 mol, manufactured by Tokyo Chemical Industry Co., Ltd.) and 2-acetoxymethyl-5-norbornene (6.4 g, 0.05 mol) were mixed in a glass-made polymerization bottle of 200 mL under nitrogen to prepare a monomer solution. On the other hand, a 10 mL glass ampoule was charged with nickel acetylacetonate (4.7 mg, 18.5 µmol, manufactured by Aldrich Corporation), tris(pentafluorophenyl)borane [B(C₆F₅)₃] (28.3 mg, 5.6 µmol) and trimethylaluminum (2.0 M toluene solution, 0.046 ml, 92.5 µmol, manufactured by Sigma-Aldrich Japan K. K.) in a glove box under nitrogen, and they were dissolved in 5 ml of dehydrated toluene. Immediately, the ampoule was taken out from the glove box, and a whole amount thereof was added to the polymerization bottle to start polymerization. The polymerization was carried out at room temperature for 1 hour, and the reaction was quenched by addition of the reaction liquid into a large amount of methanol to precipitate a polymer. The polymer was separated by filtrating and washed, and then it was dried at 60°C for 5 hours under reduced pressure to obtain 6.4 g of polymer as a white powder.
The polymer thus obtained was readily soluble in a conventional organic solvent such as THF and chloroform, and it had a number average molecular weight Mn of 343,000 and Mw/Mn of 1.95 in terms of a molecular weight distribution of a weight average molecular weight Mw to a number average molecular weight Mn. Also, a composition of the 2-acetoxymethyl-5-norbornene monomer unit in the polymer which was calculated from an integrated intensity of ¹H-NMR was 31.1 % by mole.

### Comparative Example 1

The polymerization was carried out by the same method as in Example 1, except that borane [B(C₆F₅)₃] was omitted in Example 1. A polymer was not produced.

**Table 1**

| Items | Standard | Measuring conditions | Example | | | |
|---|---|---|---|---|---|---|
| | | | 1 | 2 | 8 | 9 |
| DMA chart | JIS K7244-4 | Measuring equipment: Rheogel-E4000 (manufactured by UBM Co., Ltd.) 10 hz, initial temperature: 40°C, step temperature: 2°C, final temperature: 300°C, heating rate: 3°C/min | | | | |
| E" °C | | | 232 | 230 | 244 | 235 |
| tan δ °C | | | 252 | 242 | 260 | 253 |
| Total light transmittance | JIS K7105 | Measuring equipment: Automatic Haze meter, manufactured by Tokyo Denshoku Co., Ltd. | 91.7 | 91.8 | 91.8 | 91.2 |
| Haze (%) | JIS K7105 | Measuring equipment: Automatic Haze meter, manufactured by Tokyo Denshoku Co., Ltd. | 0.3 | 1.4 | 0.4 | 0.5 |
| Tensile modulus (MD) GPa | JIS K6911 | Measuring equipment: EZ-Test, manufactured by Shimadzu Corporation, chuck-to-chuck distance: 115 mm, width: 10 mm, stretching rate: 5 mm/min | 2.68 | 2.9 | 3.32 | 2.98 |
| Tensile strength (MD) MPa | | | 37.7 | 42.9 | 63.1 | 54.8 |
| Tensile elongation (MD) % | | | 2.4 | 2.2 | 5.0 | 4.9 |
| Thickness (µm) | | | 30 | 30 | 55 | 60 |

### Industrial Applicability

The norbornene base copolymer produced by using the catalyst composition of the present invention is excellent in a transparency, a heat resistance, a low moisture absorption and an electric insulation, and therefore it can be used for optical molded articles such as lenses and polarizing films, electric insulating materials such as films, carrier tapes, film condensers, and flexible printed boards, medical vessels such as press-through packages, transfusion packs, and liquid medicine vials, food packaging molded articles such as wrapping films and trays, casings for electric appliances, automobile interior parts such as inner panels and building materials for such as car ports and glazings, and the like.

## Claims

1. A catalyst composition comprising a main catalyst (A) and a promoter (B) which are used for copolymerization of norbornene having a polar group, wherein the main catalyst (A) is a complex represented by Formula (1):
MLₙK1ₓK2_{y}K3_{z} (1)
(wherein M is one transition metal selected from group 8 elements, group 9 elements and group 10 elements in the periodic table; L is a cyclopentadienyl base ligand containing a cyclopentadiene ring; K1, K2 and K3 are anionic or neutral ligands which are different from each other; n is an integer of 0 to 2; x, y and z each are an integer including 0, and a sum thereof is 1 to 7); and the promoter (B) is an ionic compound (a) which can be reacted with the main catalyst (A) to form a cationic transition metal compound.

2. The catalyst composition as described in claim 1, wherein in the main catalyst (A), M of Formula (1) is nickel.

3. The catalyst composition as described in claim 1 or 2, wherein organoaluminum (b) is contained in the promoter (B), and the organoaluminum (b) is an organoaluminum compound represented by Formula (b):
AlR^{a}R^{b}R^{c} (b)
(wherein R^{a} and R^{b} are the same or different and are a hydrocarbon group having 1 to 10 carbon atoms or a hydrogen atom; R^{c} is a hydrocarbon group having 1 to 10 carbon atoms, provided that R^{c} may be the same as or different from R^{a} and R^{b}).

4. The catalyst composition as described in any of claims 1 to 3, wherein a phosphine base ligand (c) is contained in the promoter (B).

5. The catalyst composition as described in any of claims 1 to 4, wherein the promoter (a) is at least one or more compounds selected from tris(pentafluorophenyl)borane, trityltetrakis and N,N'-dimethylaniliniumtetrakis(pentafluorophenyl) borate.

6. A process for producing norbornene base copolymer by using the catalyst composition as described in any of claims 1 to 5.

7. A norbornene base copolymer obtained by the production process as described in claim 6, wherein it comprises monomer units represented by the following Formulas (2) and (3), and it has a number average molecular weight (Mn) of 300,000 to 2,000,000: 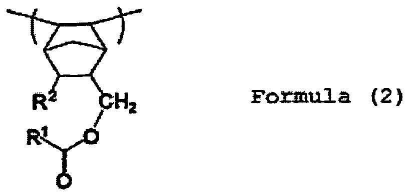 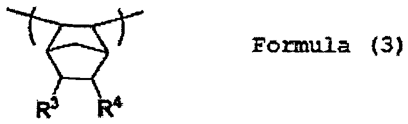 (wherein R¹ represents an alkyl group having 1 to 10 carbon atoms, and R², R³ and R⁴ may be different from each other and represent a hydrogen atom or an alkyl group having 1 to 10 carbon atoms).

8. The norbornene base copolymer as described in claim 7, comprising only the monomer units represented by Formulas (2) and (3).

9. The norbornene base copolymer as described in claim 7 or 8, wherein a molecular weight distribution (Mw/Mn) of a weight average molecular weight (Mw) to a number average molecular weight (Mn) falls in a range of 1.0 to 4.0.

10. The norbornene base copolymer as described in claim 7 or 8, wherein R¹ in Formula (2) is methyl.

11. The norbornene base copolymer as described in claim 7 or 8, wherein R¹ in Formula (2) and R³ and R⁴ in Formula (3) are hydrogen atoms.

12. The norbornene base copolymer as described in claim 7 or 8, wherein the monomer unit represented by Formula (2) is contained in a range of 10 to 70 % by mole.

13. A heat resistant film prepared by molding the copolymer as described in any of claims 7 to 12 into a film.
